# EUROPEAN PATENT APPLICATION

(11) **EP 4 319 261 A1**
(43) Date of publication of application: **07.02.2024**
(21) Application number: 22779013.6
(22) Date of filing: 30.03.2022
(51) Int. Cl.: H04W 24/08

(54) **COMMUNICATION MODE DETERMINATION METHOD AND APPARATUS, AND RELATED DEVICE**

(30) Priority: 02.04.2021 CN 202110363792
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN); KE, Xiaowan, Dongguan, Guangdong 523863 (CN)
(74) Representative: Conti, Marco
(86) International application number: PCT/CN2022/084051
(87) International publication number: WO 2022/206831

(57) **Abstract**

This application discloses a method and apparatus for determining a communication mode, and a related device, and pertains to the field of communication technologies. The method for determining a communication mode in embodiments of this application includes: obtaining, by a terminal, first information, where the first information includes at least one of the following: a mapping relationship between first objects and relay communication modes, a user equipment routing selection policy URSP, a relay communication mode indicated by an application layer, and an existing relay communication mode of the terminal; the first object includes an application identifier or a service type; and the URSP carries a relay communication mode; and determining, by the terminal, a first relay communication mode based on the first information.

## Description

### CROSS-REFERENCE TO RELATED APPLICATIONS

This application claims priority to Chinese Patent Application No. 202110363792.9, filed in China on April 02, 2021, which is incorporated herein by reference in its entirety.

### TECHNICAL FIELD

This application pertains to the field of communication technologies, and specifically, relates to a method and apparatus for determining a communication mode, and a related device.

### BACKGROUND

In the existing mobile communication system, the current relay communication modes include Layer 2 (Layer 2, L2) and Layer 3 (Layer 3, L3) relay communication modes, both of which can be used to forward the service data of remote user equipment (remote user equipment, Remote UE). However, in the prior art, there is no relevant solution to how the terminal determines which relay communication mode to be used for communication in scenarios where L2 relay communication and L3 relay communication coexist, in other words, in a case that the terminal supports these two relay communication modes.

### SUMMARY

Embodiments of this application provide a method and apparatus for determining a communication mode, and a related device, so as to determine a specific relay communication mode for terminal communication in a case that a terminal supports two relay communication modes.

According to a first aspect, a method for determining a communication mode is provided, where the method includes:
obtaining, by a terminal, first information, where the first information includes at least one of the following: a mapping relationship between first objects and relay communication modes, a user equipment routing selection policy URSP, a relay communication mode indicated by an application layer, and an existing relay communication mode of the terminal; the first object includes an application identifier or a service type; and the URSP carries a relay communication mode; and
determining, by the terminal, a first relay communication mode based on the first information.

According to a second aspect, an apparatus for determining a communication mode is provided, where the apparatus includes:
a first obtaining module, configured to obtain first information, where the first information includes at least one of the following: a mapping relationship between first objects and relay communication modes, a user equipment routing selection policy URSP, a relay communication mode indicated by an application layer, and an existing relay communication mode of a terminal; the first object includes an application identifier or a service type; and the URSP carries a relay communication mode; and
a first determining module, configured to determine a first relay communication mode based on the first information.

According to a third aspect, a method for determining a communication mode is provided, where the method includes:
transmitting, by a first core network device, first information to a terminal; where
the first information includes at least one of the following: a mapping relationship between first objects and relay communication modes and a user equipment routing selection policy URSP; the first object includes an application identifier or a service type; and the URSP carries a relay communication mode.

According to a fourth aspect, an apparatus for determining a communication mode is provided, where the apparatus includes:
a first transmitting module, configured to transmit first information to a terminal; where
the first information includes at least one of the following: a mapping relationship between first objects and relay communication modes and a user equipment routing selection policy URSP; the first object includes an application identifier or a service type; and the URSP carries a relay communication mode.

According to a fifth aspect, a method for determining a communication mode is provided, where the method includes:
transmitting, by a second core network device, second information to a first core network device; where
the second information is used for assisting in relay communication mode selection.

According to a sixth aspect, an apparatus for determining a communication mode is provided, where the apparatus includes:
a second transmitting module, configured to transmit second information to a first core network device; where
the second information is used for assisting in relay communication mode selection.

According to a seventh aspect, a method for determining a communication mode is provided, where the method includes:
transmitting, by an application server, third information to a second core network device, where the third information includes information about relay communication mode selection.

According to an eighth aspect, an apparatus for determining a communication mode is provided, where the apparatus includes:
a third transmitting module, configured to transmit third information to a second core network device, where the third information includes information about relay communication mode selection.

According to a ninth aspect, a terminal is provided, where the terminal includes a processor, a memory, and a program or instructions stored in the memory and capable of running on the processor, and when the program or instructions are executed by the processor, the steps of the method according to the first aspect are implemented.

According to a tenth aspect, a terminal is provided, including a processor and a communication interface, where the communication interface is configured to obtain, first information, where the first information includes at least one of the following: a mapping relationship between first objects and relay communication modes, a user equipment routing selection policy URSP, a relay communication mode indicated by an application layer, and an existing relay communication mode of the terminal; the first object includes an application identifier or a service type; and the URSP carries a relay communication mode; and the processor is configured to determine a first relay communication mode based on the first information.

According to an eleventh aspect, a core network device is provided, where the core network device includes a processor, a memory, and a program or instructions stored in the memory and capable of running on the processor, and when the program or instructions are executed by the processor, the steps of the method according to the third aspect are implemented.

According to a twelfth aspect, a core network device is provided, including a processor and a communication interface, where the communication interface is configured to transmit first information to a terminal; the first information includes at least one of the following: a mapping relationship between first objects and relay communication modes and a user equipment routing selection policy URSP; the first object includes an application identifier or a service type; and the URSP carries a relay communication mode.

According to a thirteenth aspect, a core network device is provided, where the core network device includes a processor, a memory, and a program or instructions stored in the memory and capable of running on the processor, and when the program or instructions are executed by the processor, the step of the method according to the fifth aspect is implemented.

According to a fourteenth aspect, a core network device is provided, including a processor and a communication interface, where the communication interface is configured to transmit second information to a first core network device, where the second information is used for assisting in relay communication mode selection.

According to a fifteenth aspect, an application server is provided, where the application server includes a processor, a memory, and a program or instructions stored in the memory and capable of running on the processor, and when the program or instructions are executed by the processor, the step of the method according to the seventh aspect is implemented.

According to a sixteenth aspect, an application server is provided, including a processor and a communication interface, where the communication interface is configured to transmit third information to a second core network device, where the third information includes information about relay communication mode selection.

According to a seventeenth aspect, a readable storage medium is provided, where the readable storage medium stores a program or instructions, and when the program or instructions are executed by a processor, the steps of the method according to the first aspect are implemented, the step of the method according to the third aspect is implemented, the step of the method according to the fifth aspect is implemented, or the step of the method according to the seventh aspect is implemented.

According to an eighteenth aspect, a chip is provided, where the chip includes a processor and a communication interface, the communication interface is coupled to the processor, and the processor is configured to run a program or instructions to implement the steps of the method according to the first aspect, the step of the method according to the third aspect, the step of the method according to the fifth aspect, or the step of the method according to the seventh aspect.

According to a nineteenth aspect, a computer program or a program product is provided, where the computer program or the program product is stored in a non-volatile storage medium, the program or the program product is executed by at least one processor to implement the steps of the method according to the first aspect, the step of the method according to the third aspect, the step of the method according to the fifth aspect, or the step of the method according to the seventh aspect.

In the embodiments of this application, a terminal can determine a relay communication mode, that is, a first relay communication mode, used for terminal communication based on at least one of a relay communication mode corresponding to an application identifier or service type, a relay communication mode carried by URSP, a relay communication mode indicated by an application layer, and an existing relay communication mode of the terminal, so as to quickly determine the specific relay communication mode for terminal communication in a case that the terminal supports two relay communication modes.

### BRIEF DESCRIPTION OF DRAWINGS

FIG. 1 is a block diagram of a wireless communication system to which embodiments of this application may be applied;
FIG. 2 is a flowchart of a method for determining a communication mode according to an embodiment of this application;
FIG. 3 is a flowchart of another method for determining a communication mode according to an embodiment of this application;
FIG. 4 is a flowchart of another method for determining a communication mode according to an embodiment of this application;
FIG. 5 is a flowchart of another method for determining a communication mode according to an embodiment of this application;
FIG. 6 is a flowchart of another method for determining a communication mode according to an embodiment of this application;
FIG. 7 is a schematic structural diagram of an apparatus for determining a communication mode according to an embodiment of this application;
FIG. 8 is a schematic structural diagram of another apparatus for determining a communication mode according to an embodiment of this application;
FIG. 9 is a schematic structural diagram of another apparatus for determining a communication mode according to an embodiment of this application;
FIG. 10 is a schematic structural diagram of another apparatus for determining a communication mode according to an embodiment of this application;
FIG. 11 is a structural diagram of a communication device according to an embodiment of this application;
FIG. 12 is a structural diagram of a terminal according to an embodiment of this application;
FIG. 13 is a structural diagram of a first core network device according to an embodiment of this application; and
FIG. 14 is a structural diagram of a second core network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances so that the embodiments of this application can be implemented in other orders than the order illustrated or described herein. Moreover, the objects distinguished by "first" and "second" are usually of one type, and the number of objects is not limited. For example, the first object may be one or more than one. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

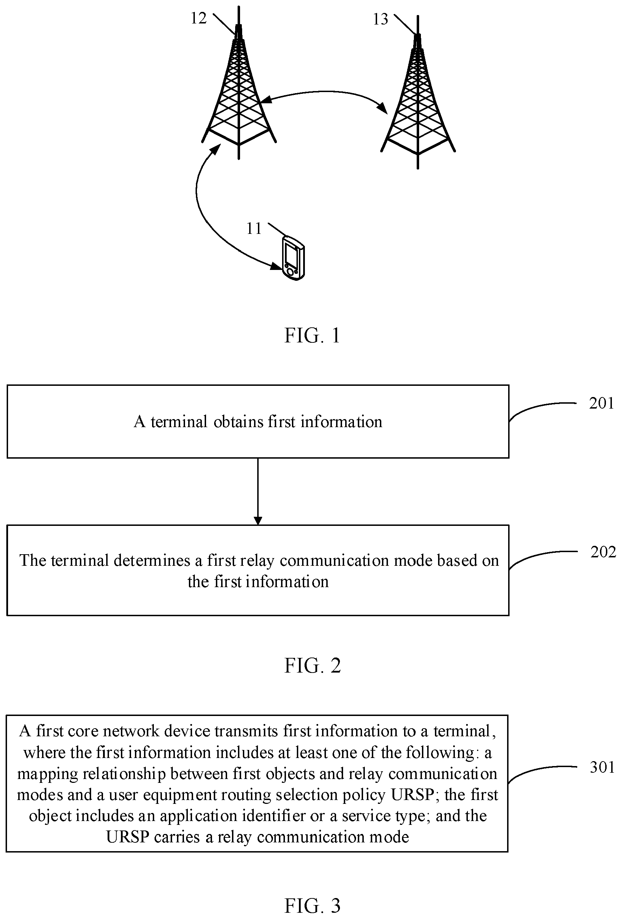

FIG. 1 is a block diagram of a wireless communication system to which the embodiments of this application may be applied. The wireless communication system includes a terminal 11, a first core network device 12, and a second core network device 13. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VLTE), or pedestrian user equipment (PUE). The wearable device includes a smart watch, a wrist band, earphones, glasses, and the like. It should be noted that a specific type of the terminal 11 is not limited in the embodiments of this application. The core network device 12 may be, but is not limited to, a policy control function (Policy Control Function, PCF), and the core network device 13 may be, but is not limited to, a unified data repository (Unified Data Repository, UDR).

The following describes in detail a method for determining a communication mode provided in the embodiments of this application by using some embodiments and application scenarios thereof with reference to the accompanying drawings.

Refer to FIG. 2. FIG. 2 is a flowchart of a method for determining a communication mode according to an embodiment of this application. The method may be executed by a terminal, and as shown in FIG. 2, includes the following steps.

Step 201: A terminal obtains first information, where the first information includes at least one of the following: a mapping relationship between first objects and relay communication modes, a user equipment routing selection policy (UE Route Selection Policy, URSP), a relay communication mode indicated by an application layer, and an existing relay communication mode of the terminal; the first object includes an application identifier or a service type; and the URSP carries a relay communication mode.

In this embodiment, the first object may include an application identifier or a service type. In other words, the mapping relationship between the first objects and the relay communication modes may include a mapping relationship between application identifiers and relay communication modes or a mapping relationship between service types and relay communication modes. Optionally, the mapping relationship may be pre-configured or may be transmitted by the first core network device.

The user equipment route selection policy (UE Route Selection Policy, URSP) carries a relay communication mode, where the URSP may be pre-configured or may be transmitted to the terminal by the first core network device.

For the relay communication mode indicated by the application layer, specifically, the terminal may receive indication information transmitted by the application layer for indicating a relay communication mode and obtain the relay communication mode indicated by the application layer.

The relay communication mode above mentioned may include, but is not limited to, at least one of the following: a Layer 2 (Layer 2, L2) relay communication mode and a Layer 3 (Layer 3, L3) relay communication mode. Alternatively, the relay communication mode may include, but is not limited to, at least one of the following: an L2-only relay communication mode, which may also be referred to as L2 only (L2 only); an L2-preferred relay communication mode, which may also be referred to as L2 preferred (L2 preferred); an L3-only relay communication mode, which may also be referred to as L3 only (L3 only); an L3-preferred relay communication mode, which may also be referred to as L3 preferred (L3 preferred); a relay communication mode selected by the terminal; and a pre-configured relay communication mode, which may also be referred to as no preferred (No preferred) or no indication (No indication).

Step 202: The terminal determines a first relay communication mode based on the first information.

In an embodiment, in a case that the first information includes only one of a mapping relationship between first objects and relay communication modes, a URSP, a relay communication mode indicated by an application layer, and an existing relay communication mode of the terminal, the first relay communication mode may be a relay communication mode corresponding to that item. An example is used for description hereinafter.

Manner 1: If the first information includes a mapping relationship between a first object and a relay communication mode, a relay communication mode mapped by the first object can be selected as the first relay communication mode.

For example, in a case that LTE needs to transmit data related to an application with an application identifier of ProSe application ID#1, if the relay communication mode mapped by ProSe application ID#1 is L2 only, the UE can select the L2 relay communication mode to perform a discovery and/or connection establishment procedure, which means that the first relay communication mode is L2 only; if the relay communication mode mapped by ProSe application ID#1 is L2 preferred, the UE can preferentially or likely select the L2 relay communication mode to perform a discovery and/or connection establishment procedure, which means that the first relay communication mode is L2 preferred; if the relay communication mode mapped by ProSe application ID#1 is L3 only, the UE can select the L3 relay communication mode to perform a discovery and/or connection establishment procedure, which means that the first relay communication mode is L3 only; if the relay communication mode mapped by ProSe application ID#1 is L3 preferred, the UE can preferentially or likely select the L3 relay communication mode to perform a discovery and/or connection establishment procedure, which means that the first relay communication mode is L3 preferred; and if the relay communication mode mapped by ProSe application ID#1 is no preferred or no indication, the UE can select a relay communication mode by itself or adopt a pre-configured relay communication mode to perform a discovery and/or connection establishment procedure, which means that the first relay communication mode is no preferred or no indication.

Manner 2: If the first information includes URSP, the relay communication mode carried by the URSP can be selected as the first relay communication mode.

For example, if the relay communication mode carried by the URSP is L2 only, the LTE can select the L2 relay communication mode to perform a discovery and/or connection establishment procedure, which means that the first relay communication mode is L2 only; if the relay communication mode carried by the URSP is L2 preferred, the LTE can preferentially or likely select the L2 relay communication mode to perform a discovery and/or connection establishment procedure, which means that the first relay communication mode is L2 preferred; if the relay communication mode carried by the URSP is L3 only, the LTE can select the L3 relay communication mode to perform a discovery and/or connection establishment procedure, which means that the first relay communication mode is L3 only; if the relay communication mode carried by the URSP is L3 preferred, the LTE can preferentially or likely select the L3 relay communication mode to perform a discovery and/or connection establishment procedure, which means that the first relay communication mode is L3 preferred; and if the relay communication mode carried by the URSP is no preferred or no indication, the UE can select a relay communication mode by itself or adopt a pre-configured relay communication mode to perform a discovery and/or connection establishment procedure, which means that the first relay communication mode is no preferred or no indication.

Manner 3: If the first information includes the relay communication mode indicated by the application layer, the relay communication mode indicated by the application layer can be selected as the first relay communication mode.

For example, if the relay communication mode indicated by the application layer is L2 only, the LTE can select the L2 relay communication mode to perform a discovery and/or connection establishment procedure, which means that the first relay communication mode is L2 only; if the relay communication mode indicated by the application layer is L2 preferred, the UE can preferentially or likely select the L2 relay communication mode to perform a discovery and/or connection establishment procedure, which means that the first relay communication mode is L2 preferred; if the relay communication mode indicated by the application layer is L3 only, the UE can select the L3 relay communication mode to perform a discovery and/or connection establishment procedure, which means that the first relay communication mode is L3 only; if the relay communication mode indicated by the application layer is L3 preferred, the LTE can preferentially or likely select the L3 relay communication mode to perform a discovery and/or connection establishment procedure, which means that the first relay communication mode is L3 preferred; and if the relay communication mode indicated by the application layer is no preferred or no indication, the UE can select a relay communication mode by itself or adopt a pre-configured relay communication mode to perform a discovery and/or connection establishment procedure, which means that the first relay communication mode is no preferred or no indication.

Manner 4: If the first information includes the existing relay communication mode of the terminal, the existing relay communication mode of the terminal can be selected as the first relay communication mode.

For example, if the UE has currently established an L2 relay communication link, the UE selects the L2 relay communication link to transmit or forward a service, in other words, if the existing relay communication mode of the UE is the L2 relay communication mode, the first relay communication mode is the L2 relay communication mode; and if the UE has currently established an L3 relay communication link, the LTE selects the L3 relay communication link to transmit or forward a service, in other words, if the existing relay communication mode of the UE is the L3 relay communication mode, the first relay communication mode is the L3 relay communication mode.

In another embodiment, in a case that the first information includes at least two of a mapping relationship between first objects and relay communication modes, a URSP, a relay communication mode indicated by an application layer, and an existing relay communication mode of the terminal, if the relay communication modes corresponding to the at least two items are the same, the first relay communication mode may be the relay communication modes corresponding to the at least two items; and if the relay communication modes corresponding to the at least two items include at least two relay communication modes, the first relay communication mode may be a relay communication mode selected by the terminal from the at least two relay communication modes, or may be a relay communication mode with a highest priority in the at least two relay communication modes, where priorities of the at least two relay communication modes can be pre-defined by a protocol, pre-configured, or indicated by a network-side device.

In the method for determining a communication mode of this embodiment of this application, the terminal can determine a relay communication mode, that is, a first relay communication mode, used for terminal communication based on at least one of a relay communication mode corresponding to an application identifier or service type, a relay communication mode carried by URSP, a relay communication mode indicated by an application layer, and an existing relay communication mode of the terminal, so as to quickly determine the specific relay communication mode for terminal communication in a case that the terminal supports two relay communication modes.

Optionally, the relay communication mode may include at least one of the following:
an L2-only relay communication mode;
an L2-preferred relay communication mode;
an L3-only relay communication mode;
an L3-preferred relay communication mode;
a relay communication mode selected by the terminal; and
a pre-configured relay communication mode.

In this embodiment, for the L2-only relay communication mode, the terminal selects only the L2 relay communication mode for communication. For the L2-preferred relay communication mode, the terminal preferentially selects the L2 relay communication mode for communication, and if L2 relay communication mode is unavailable, the terminal may select the L3 relay communication mode for communication. For the L3-only relay communication mode, the terminal selects only the L3 relay communication mode for communication. For the L3-preferred relay communication mode, the terminal preferentially selects the L3 relay communication mode for communication, and if L3 relay communication mode is unavailable, the terminal may select the L2 relay communication mode for communication. The relay communication mode selected by the terminal means that the terminal selects the relay communication mode for communication by itself. The pre-configured relay communication mode means that the relay communication mode used for communication by the terminal is pre-configured.

Optionally, that the URSP carries a relay communication mode includes: an access type preference component corresponding to the URSP carries a relay communication mode, and a non-seamless offload indication component corresponding to the URSP carries a relay communication mode.

In this embodiment, the relay communication mode may be carried in an access type preference (Access Type Preference) component corresponding to the URSP, for example, information indicating the relay communication mode can be carried in the access type preference component; or the relay communication mode may be carried in a non-seamless offload indication (Non-Seamless Offload Indication) component corresponding to the URSP, for example, information indicating the relay communication mode can be carried in the non-seamless offload indication component.

Optionally, a granularity of the relay communication mode indicated by the application layer includes one of the following:
application identifier;
service type;
terminal;
link; and
L2 identifier.

In one embodiment, the application layer can indicate a relay communication mode based on the granularity of per application identifier (Per application ID), to be specific, indicating a relay communication mode for each application identifier. It should be understood that relay communication modes indicated by the application layer for different application identifiers may be the same or different.

In another embodiment, the application layer can indicate a relay communication mode based on the granularity of per service type (Per Service Type), to be specific, indicating a relay communication mode for each service type. It should be understood that relay communication modes indicated by the application layer for different service types may be the same or different.

In another embodiment, the application layer can indicate a relay communication mode based on the granularity of per UE (Per UE), to be specific, indicating a relay communication mode for each UE. It should be understood that relay communication modes indicated by the application layer for different UEs may be the same or different.

In another embodiment, the application layer can indicate a relay communication mode based on the granularity of per link (Per link), to be specific, indicating a relay communication mode for each link. It should be understood that relay communication modes indicated by the application layer for different links may be the same or different.

In another embodiment, the application layer can indicate a relay communication mode based on the granularity of per pair of L2 identifiers (Per pair of L2 identifiers) or per L2 identifier pair (per L2 identifier pair), to be specific, indicating a relay communication mode for each pair of L2 identifiers or each L2 identifier pair. It should be understood that relay communication modes indicated by the application layer for different L2 identifier pairs may be the same or different.

Optionally, the first information includes at least one of the mapping relationship and the URSP; and
that a terminal obtains first information includes:
receiving, by the terminal, the first information from a first core network device;
   or
obtaining, by the terminal, the first information that is pre-configured.

In one embodiment, the at least one of the mapping relationship and the URSP may be transmitted to the terminal by a first core network device, where the first core network device may be a PCF. For example, the PCF may generate the at least one of the mapping relationship and the URSP based on the second information and transmit it to the terminal, where the second information may be used for assisting in relay communication mode selection.

In another embodiment, the at least one of the mapping relationship and the URSP may be pre-configured, such that the terminal can directly obtain the at least one of the pre-configured mapping relationship and URSP.

Optionally, the first information includes the mapping relationship, and the mapping relationship is carried in a proximity service policy transmitted by the first core network device.

In this embodiment, in a case that the first information includes the mapping relationship, the first core network device can transmit a proximity service policy (ProSe Policy) to the terminal, and carry the mapping relationship in the ProSe policy.

Optionally, the first information includes the URSP, and the URSP is carried in a user equipment policy transmitted by the first core network device.

In this embodiment, in a case that the first information includes the URSP including the relay communication mode, the first core network device can transmit a user equipment policy (UE Policy) to the terminal, and carry the URSP including the relay communication mode in the UE policy.

Refer to FIG. 3. FIG. 3 is a flowchart of another method for determining a communication mode according to an embodiment of this application. The method may be executed by a first core network device, and as shown in FIG. 3, includes the following steps.

Step 301: A first core network device transmits first information to a terminal, where
the first information includes at least one of the following: a mapping relationship between first objects and relay communication modes and a user equipment routing selection policy URSP; the first object includes an application identifier or a service type; and the URSP carries a relay communication mode.

In this embodiment, the first core network device may be, for example, a PCF. The first object may include an application identifier or a service type. In other words, the mapping relationship between the first objects and the relay communication modes may include a mapping relationship between application identifiers and relay communication modes or a mapping relationship between service types and relay communication modes. The URSP carries a relay communication mode.

The relay communication mode above mentioned may include, but is not limited to, at least one of the following: an L2 relay communication mode and an L3 relay communication mode. Alternatively, the relay communication mode may include, but is not limited to, at least one of the following: an L2-only relay communication mode, which may also be referred to as L2 only (L2 only); an L2-preferred relay communication mode, which may also be referred to as L2 preferred (L2 preferred); an L3-only relay communication mode, which may also be referred to as L3 only (L3 only); an L3-preferred relay communication mode, which may also be referred to as L3 preferred (L3 preferred); a relay communication mode selected by the terminal; and a pre-configured relay communication mode, which may also be referred to as no preferred (No preferred) or no indication (No indication).

In the method for determining a communication mode of this embodiment of this application, the first core network device transmits the first information to the terminal, such that the terminal can determine a first relay communication mode for communication based on the first information, so as to assist the terminal in determining a specific relay communication mode for terminal communication in a case that the terminal supports two relay communication modes.

Optionally, that the URSP carries a relay communication mode includes: an access type preference component corresponding to the URSP carries a relay communication mode, and a non-seamless offload indication component corresponding to the URSP carries a relay communication mode.

In this embodiment, the first core network device may add the relay communication mode in an access type preference component corresponding to the URSP, for example, may add information indicating the relay communication mode in the access type preference component; or the first core network device may add the relay communication mode in the non-seamless offload indication component corresponding to the URSP, for example, may add information indicating the relay communication mode in the non-seamless offload indication component.

Optionally, the first information includes the mapping relationship, and the mapping relationship is carried in a proximity service policy transmitted by the first core network device.

In this embodiment, in a case that the first information includes the mapping relationship, the first core network device can transmit a ProSe policy to the terminal, and carry the mapping relationship in the ProSe policy.

Optionally, the first information includes the URSP, and the URSP is carried in a user equipment policy transmitted by the first core network device.

In this embodiment, in a case that the first information includes the URSP including the relay communication mode, the first core network device can transmit a UE policy to the terminal, and carry the URSP including the relay communication mode in the LTE policy.

Optionally, the method may further include:
obtaining, by the first core network device, second information, where the second information is used for assisting in relay communication mode selection; and
generating, by the first core network device, the first information based on the second information.

In this embodiment, the first core network device may generate the first information based on the second information, where the second information may be used for assisting in relay communication mode selection, for example, the second information may be information about relay communication mode selection.

Optionally, the obtaining, by the first core network device, second information may include one of the following:
receiving, by the first core network device, the second information from a second core network device;
obtaining, by the first core network device, the second information that is pre-configured;
obtaining, by the first core network device, the second information that is configured by an operator;
determining, by the first core network device, the second information based on a pre-configured policy; and
determining, by the first core network device, the second information based on an operator policy.

In this embodiment, the second information may be information transmitted by the second core network device for assisting in relay communication mode selection, where the second core network device may be a UDR; or the second information may be pre-configured information for assisting in relay communication mode selection; or the second information may be information configured by an operator for assisting in relay communication mode selection; or the second information may be information assisting in relay communication mode selection determined according to a pre-configured policy (Policy); or the second information may be information assisting in relay communication mode selection determined according to an operator policy (Policy).

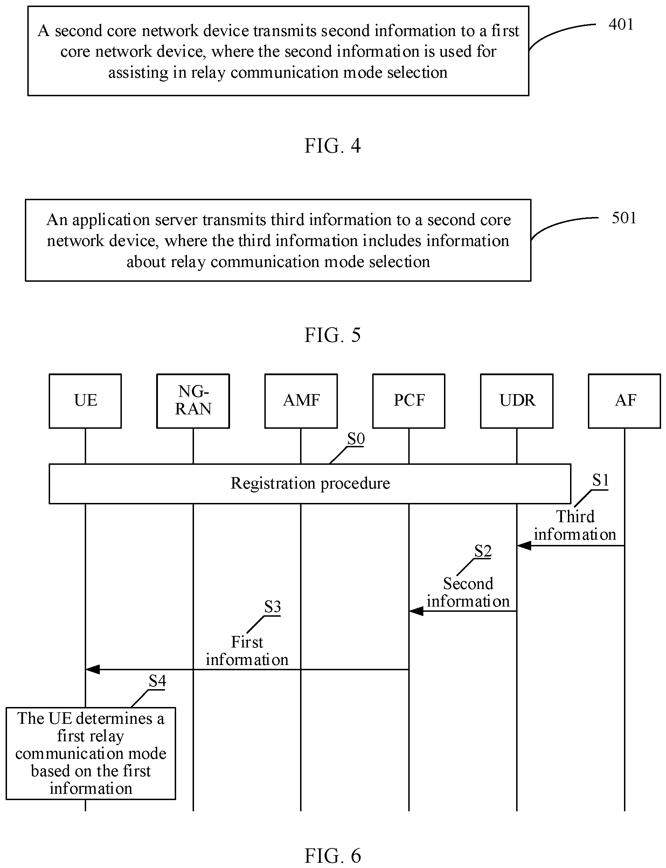

Refer to FIG. 4. FIG. 4 is a flowchart of another method for determining a communication mode according to an embodiment of this application. The method may be executed by a second core network device, and as shown in FIG. 4, includes the following steps.

Step 401: A second core network device transmits second information to a first core network device; where
the second information is used for assisting in relay communication mode selection.

In this embodiment, the second core network device may be a UDR, and the first core network device may be a PCF. The second information may be pre-configured information used for assisting in relay communication mode selection; or may be information generated by the second core network device for assisting in relay communication mode selection based on third information, where the third information may include information about relay communication mode selection. For example, the third information is information about L2 relay communication mode and/or L3 relay communication mode selection that is transmitted by an application server, and the second information may be information obtained by performing protocol format conversion on the information about the L2 relay communication mode and/or L3 relay communication mode selection.

In the method for determining a communication mode of this embodiment of this application, the second core network device transmits the second information to the first core network device, such that the first core network device can generate first information based on the second information and transmit the first information to a terminal, and the terminal in turn can determine a first relay communication mode for communication based on the first information, so as to assist the terminal in determining a specific relay communication mode for terminal communication in a case that the terminal supports two relay communication modes.

Optionally, the method may further include:
obtaining, by the second core network device, third information, where the third information includes information about relay communication mode selection; and
generating, by the second core network device, the second information based on the third information.

In this embodiment, the third information may be pre-configured information for selecting a relay communication mode, or may be information received from an application server for selecting a relay communication mode.

The second core network device generates the second information based on the third information. For example, the second information may be obtained by performing processing such as protocol format conversion on the third information, or the third information may be directly used as the second information.

Optionally, the obtaining, by the second core network device, third information may include one of the following:
obtaining, by the second core network device, the third information from an application server.

In this embodiment, the second core network device may obtain the third information from the application server, where the application server may include, but is not limited to, an application function (Application Function, AF) application server or a proximity service (ProSe) application server.

Refer to FIG. 5. FIG. 5 is a flowchart of another method for determining a communication mode according to an embodiment of this application. The method may be executed by an application server, and as shown in FIG. 5, includes the following steps.

Step 501: An application server transmits third information to a second core network device, where the third information includes information about relay communication mode selection.

In this embodiment, the application server may include, but is not limited to, an AF application server or a ProSe application server. The third information may include information for selecting an L2 relay communication mode and/or an L3 relay communication mode, and may be used by the second core network device to generate second information.

In this embodiment of this application, the application server transmits the third information to the second core network device, such that the second core network device can generate the second information based on the third information and transmit the second information to the first core network device, the first core network device can generate first information based on the second information and transmit the first information to a terminal, and the terminal in turn can determine a first relay communication mode for communication based on the first information, so as to assist the terminal in determining a specific relay communication mode for terminal communication in a case that the terminal supports two relay communication modes.

This embodiment of this application is described below with reference to examples.

Example 1: The first information includes at least one of a mapping relationship and a URSP.

Referring to FIG. 6, the method for determining a communication mode may include the following steps.

Step S0: UE performs a registration procedure to obtain a near field communication grant.

Step S 1: The application server transmits the third information to a UDR.

In this step, the application server may be an AF application server or a ProSe application server. The third information may include information for selecting an L2 relay communication mode and/or an L3 relay communication mode, and is used by the second core network device to generate second information.

Step S2: After receiving the third information, the UDR stores the third information, generates the second information based on the third information, and transmits the second information to a PCF, where the second information is used by the PCF to generate first information.

Step S3. After receiving the second information, the PCF generates the first information and transmits the first information to the UE.

The first information may include at least one of the following:
a mapping relationship between application identifiers or service types and relay communication modes, where the mapping relationship is transmitted to the UE as a ProSe policy; and
a URSP, where an access type preference component or a non-seamless offload indication component of the URSP includes a relay communication mode, and the URSP is transmitted to the LTE as a UE policy.

The relay communication mode includes at least one of the following:
L2 only, that is, an L2-only relay communication mode;
L2 preferred, that is, an L2-only relay communication mode;
L3 only, that is, an L3-only relay communication mode;
L3 preferred, that is, an L3-only relay communication mode; and
a no preferred/indication, that is, selection of an L3 relay communication mode and/or an L2 relay communication mode depends on the terminal implementation or pre-configuration.

Step S4: The UE determines a first relay communication mode based on the first information.

In this step S4, in a case that the first information includes the foregoing mapping relationship, the UE selects a final relay communication mode, that is, the first relay communication mode, based on communication modes mapped by the application identifiers/service types in the mapping relationship.

For example, if a relay communication mode mapped by ProSe application ID#1 is L2 only, the LTE selects the L2 relay communication mode to perform a discovery and/or connection establishment procedure; if a relay communication mode mapped by ProSe application ID#2 is L3 only, the UE selects the L3 relay communication mode to perform a discovery and/or connection establishment procedure; if a relay communication mode mapped by ProSe application ID#3 is L2 preferred, the LTE preferentially selects the L2 relay communication mode to perform a discovery and/or connection establishment procedure; if a relay communication mode mapped by ProSe application ID#4 is L3 preferred, the UE preferentially selects the L3 relay communication mode to perform a discovery and/or connection establishment procedure; and if a relay communication mode mapped by ProSe application ID#5 is no preferred/indication, the UE selects a relay communication mode based on implementation or pre-configuration information to perform a discovery and/or connection establishment procedure.

In this step S4, in a case that the first information includes the URSP, the UE determines a final relay communication mode, that is, the first relay communication mode, based on the communication mode included in the access type preference component or non-seamless offload indication component corresponding to the URSP.

For example, if the relay communication mode included in the access type preference component or non-seamless offload indication component corresponding to the URSP is L2 only, the UE selects the L2 relay communication mode to perform the discovery and/or connection establishment procedure; and if the relay communication mode included in the access type preference component or non-seamless offload indication component corresponding to the URSP is L3 only, the UE selects the L3 relay communication mode to perform the discovery and/or connection establishment procedure.

Example 2: The first information includes a relay communication mode indicated by an application layer.

The relay communication mode indicated by the application layer can be understood as a relay communication mode indicated by the application layer to the terminal, and the granularity of the relay communication mode indicated by the application layer may include at least one of the following:
per application identifier/service type, that is, the relay communication mode is in a per-service level;
per user, that is, the relay communication mode is in a per-user level;
per link, that is, the relay communication mode is in a per-link level; and
per Layer 2 identifier, that is, the relay communication mode is in a per-pair of Layer 2 identifiers.

It should be noted that for the relevant content of the relay communication mode in this example, reference may be made to the relevant description of Example 1, and to avoid repetition, details are not repeated herein.

In this example, the UE determines the first relay communication mode based on the relay communication mode indicated by the application layer.

For example, if the relay communication mode indicated by the application layer is L2 only, the UE selects the L2 relay communication mode to perform the discovery and/or connection establishment procedure; and if the relay communication mode indicated by the application layer is L3 only, the UE selects the L3 relay communication mode to perform the discovery and/or connection establishment procedure.

Example 3: The first information includes an existing relay communication mode of the terminal.

In this example, the first information includes an existing relay communication mode of the terminal, and the UE determines the first relay communication mode based on the existing relay communication mode of the terminal.

For example, if the UE has currently established an L2 relay communication link, the UE selects the L2 relay communication link to transmit or forward a service; and if the UE has currently established an L3 relay communication link, the UE selects the L3 relay communication link to transmit or forward a service.

It should be noted that the method for determining a communication mode provided in this embodiment of this application may be performed by an apparatus for determining a communication mode or a control module for performing the method for determining a communication mode in the apparatus for determining a communication mode. An apparatus for determining the communication mode provided in an embodiment of this application is described by assuming that the method for determining a communication mode in the embodiments of this application is performed by the apparatus for determining a communication mode.

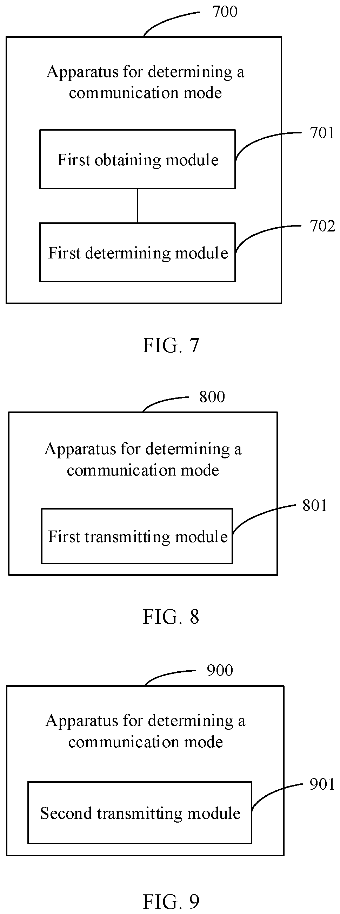

Refer to FIG. 7. FIG. 7 is a structural diagram of an apparatus for determining a communication mode according to an embodiment of this application. As shown in FIG. 7, the apparatus 700 for determining a communication mode includes:
a first obtaining module 701, configured to obtain first information, where the first information includes at least one of the following: a mapping relationship between first objects and relay communication modes, a user equipment routing selection policy URSP, a relay communication mode indicated by an application layer, and an existing relay communication mode of a terminal; the first object includes an application identifier or a service type; and the URSP carries a relay communication mode; and
a first determining module 702, configured to determine a first relay communication mode based on the first information.

Optionally, the relay communication mode includes at least one of the following:
a Layer 2 L2-only relay communication mode;
an L2-preferred relay communication mode;
a Layer 3 L3-only relay communication mode;
an L3-preferred relay communication mode;
a relay communication mode selected by the terminal; and
a pre-configured relay communication mode.

Optionally, that the URSP carries a relay communication mode includes: an access type preference component corresponding to the URSP carries a relay communication mode, and a non-seamless offload indication component corresponding to the URSP carries a relay communication mode.

Optionally, a granularity of the relay communication mode indicated by the application layer includes one of the following:
application identifier;
service type;
terminal;
link; and
L2 identifier.

Optionally, the first information includes at least one of the mapping relationship and the URSP; and
the first obtaining module is specifically configured to:
receive the first information from a first core network device;
   or
obtain the first information that is pre-configured.

Optionally, the first information includes the mapping relationship, and the mapping relationship is carried in a proximity service policy transmitted by the first core network device.

Optionally, the first information includes the URSP, and the URSP is carried in a user equipment policy transmitted by the first core network device.

The apparatus for determining a communication mode in this embodiment of this application may be an apparatus, an apparatus or electronic device with an operating system, or a component, integrated circuit, or chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine or the like, which are not specifically limited in the embodiments of this application.

The apparatus for determining a communication mode provided in this embodiment of this application can implement the processes implemented by the method embodiment in FIG. 2, with the same technical effects achieved. To avoid repetition, details are not repeated herein.

Refer to FIG. 8. FIG. 8 is a structural diagram of another apparatus for determining a communication mode according to an embodiment of this application. As shown in FIG. 8, the apparatus 800 for determining a communication mode includes:
a first transmitting module 801, configured to transmit first information to a terminal; where
the first information includes at least one of the following: a mapping relationship between first objects and relay communication modes and a user equipment routing selection policy URSP; the first object includes an application identifier or a service type; and the URSP carries a relay communication mode.

Optionally, that the URSP carries a relay communication mode includes: an access type preference component corresponding to the URSP carries a relay communication mode, and a non-seamless offload indication component corresponding to the URSP carries a relay communication mode.

Optionally, the first information includes the mapping relationship, and the mapping relationship is carried in a proximity service policy transmitted by the apparatus 800 for determining a communication mode.

Optionally, the first information includes the URSP, and the URSP is carried in a user equipment policy transmitted by the apparatus 800 for determining a communication mode.

Optionally, the apparatus further includes:
a second obtaining module, configured to obtain second information, where the second information is used for assisting in relay communication mode selection; and
a first generating module, configured to generate the first information based on the second information.

Optionally, the second obtaining module is specifically configured to perform one of the following:
receiving the second information from a second core network device;
obtaining the second information that is pre-configured;
obtaining the second information that is configured by an operator;
determining the second information based on a pre-configured policy; and
determining the second information based on an operator policy.

The apparatus for determining a communication mode in this embodiment of this application may be an apparatus, an apparatus or electronic device with an operating system, or a component, integrated circuit, or chip in a first core network device. For example, the first core network device may include, but is not limited to, the foregoing PCF.

The apparatus for determining a communication mode provided in this embodiment of this application can implement the processes implemented by the method embodiment in FIG. 3, with the same technical effects achieved. To avoid repetition, details are not repeated herein.

Refer to FIG. 9. FIG. 9 is a structural diagram of another apparatus for determining a communication mode according to an embodiment of this application. As shown in FIG. 9, the apparatus 900 for determining a communication mode includes:
a second transmitting module 901, configured to transmit second information to a first core network device; where
the second information is used for assisting in relay communication mode selection.

Optionally, the apparatus further includes:
a third obtaining module, configured to obtain third information, where the third information includes information about relay communication mode selection; and
a second generating module, configured to generate the second information based on the third information.

Optionally, the third obtaining module is specifically configured to:
obtain the third information from an application server.

The apparatus for determining a communication mode in this embodiment of this application may be an apparatus, an apparatus or electronic device with an operating system, or a component, integrated circuit, or chip in a second core network device. For example, the second core network device may include, but is not limited to, the foregoing UDR.

The apparatus for determining a communication mode provided in this embodiment of this application can implement the processes implemented by the method embodiment in FIG. 4, with the same technical effects achieved. To avoid repetition, details are not repeated herein.

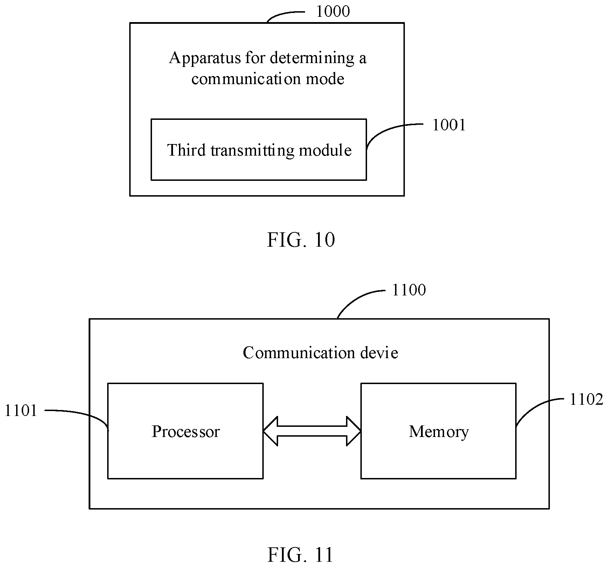

Refer to FIG. 10. FIG. 10 is a structural diagram of another apparatus for determining a communication mode according to an embodiment of this application. As shown in FIG. 10, the apparatus 1000 for determining a communication mode includes:
a third transmitting module 1001, configured to transmit third information to a second core network device, where the third information includes information about relay communication mode selection.

The apparatus for determining a communication mode in this embodiment of this application may be an apparatus, an apparatus or electronic device with an operating system, or a component, integrated circuit, or chip in an application server.

The apparatus for determining a communication mode provided in this embodiment of this application can implement the processes implemented by the method embodiment in FIG. 5, with the same technical effects achieved. To avoid repetition, details are not repeated herein.

Optionally, as shown in FIG. 11, an embodiment of this application further provides a communication device 1100 including a processor 1101, a memory 1102, and a program or instructions stored in the memory 1102 and capable of running on the processor 1101. For example, in a case that the communication device 1100 is a terminal, when the program or instructions are executed by the processor 1101, the various processes of the foregoing embodiment of the method for determining a communication mode on the terminal side can be implemented, with the same technical effects achieved; in a case that the communication device 1100 is a first core network device, when the program or instructions are executed by the processor 1101, the various processes of the foregoing embodiment of the method for determining a communication mode on the first core network device side can be implemented, with the same technical effects achieved; in a case that the communication device 1100 is a second core network device, when the program or instructions are executed by the processor 1101, the various processes of the foregoing embodiment of the method for determining a communication mode on the second core network device side can be implemented, with the same technical effects achieved; and in a case that the communication device 1100 is an application server, when the program or instructions are executed by the processor 1101, the various processes of the foregoing embodiment of the method for determining a communication mode on the application server side can be implemented, with the same technical effects achieved. To avoid repetition, details are not repeated herein.

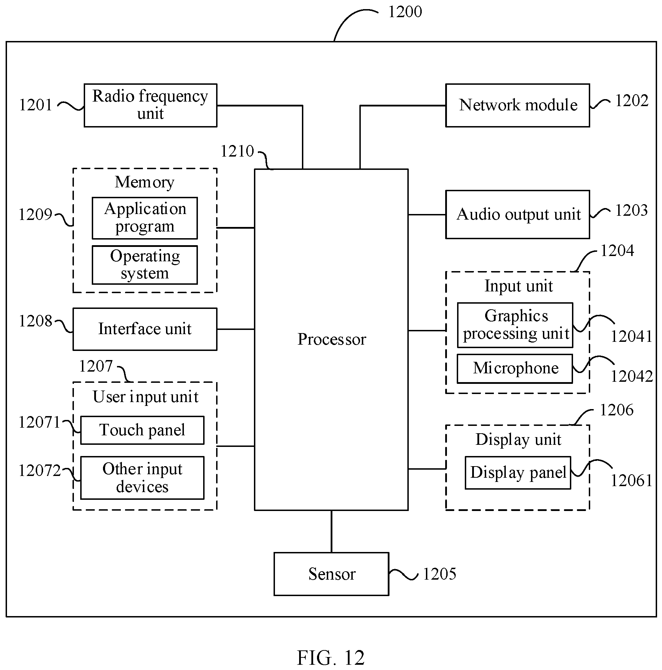

An embodiment of this application further provides a terminal including a processor and a communication interface, where the communication interface is configured to obtain first information, where the first information includes at least one of the following: a mapping relationship between first objects and relay communication modes, a user equipment routing selection policy URSP, a relay communication mode indicated by an application layer, and an existing relay communication mode of the terminal; the first object includes an application identifier or a service type; and the URSP carries a relay communication mode; and the processor is configured to determine a first relay communication mode based on the first information. This terminal embodiment corresponds to the foregoing method embodiment on the terminal side. All implementations in the foregoing method embodiment may be applicable to this terminal embodiment, with the same technical effect achieved. Specifically, FIG. 12 is a schematic diagram of a hardware structure of a terminal for implementing embodiments of this application.

The terminal 1200 includes, but is not limited to, at least some of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

It can be understood by those skilled in the art that the terminal 1200 may further include a power supply (for example, a battery) supplying power to the components. The power supply may be logically connected to the processor 1210 via a power management system, so that functions such as charge management, discharge management, and power consumption management are implemented by using the power management system. The structure of the terminal shown in FIG. 12 does not constitute any limitation on the terminal, and the terminal may include more or fewer components than shown in the figure, or combine some of the components, or have different arrangements of the components. Details are not described herein.

It should be understood that in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include a display panel 12061. The display panel 12061 may be configured in a form of a liquid crystal display, an organic light-emitting diode display, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or a power on/off key), a trackball, a mouse, a joystick, and the like. Details are not described herein.

In this embodiment of this application, the radio frequency unit 1201 transmits downlink data received from a network-side device to the processor 1210 for processing, and in addition, transmits uplink data to the network-side device. Generally, the radio frequency unit 121 includes but is not limited to an antenna, at least one amplifier, a transceiver, a coupler, a low noise amplifier, a duplexer, and the like.

The memory 1209 may be configured to store software programs or instructions and various data. The memory 1209 may include a program or instruction storage area and a data storage area. The program or instruction storage area may store an operating system, an application program or instruction required by at least one function (for example, a sound playback function or an image playback function), and the like. Further, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 1210 may include one or more processing units. Optionally, an application processor and a modem processor may be integrated in the processor 1210. The application processor primarily processes an operating system, user interfaces, application programs or instructions, and the like. The modem processor primarily processes radio communication, for example, being a baseband processor. It can be understood that the modem processor may alternatively be not integrated in the processor 1210.

The radio frequency unit 1201 is configured to obtain, first information, where the first information includes at least one of the following: a mapping relationship between first objects and relay communication modes, a user equipment routing selection policy URSP, a relay communication mode indicated by an application layer, and an existing relay communication mode of the terminal; the first object includes an application identifier or a service type; and the URSP carries a relay communication mode. The processor 1210 is configured to determine a first relay communication mode based on the first information.

In the embodiments of this application, a terminal can determine a relay communication mode, that is, a first relay communication mode, used for terminal communication based on at least one of a relay communication mode corresponding to an application identifier or service type, a relay communication mode carried by URSP, a relay communication mode indicated by an application layer, and an existing relay communication mode of the terminal, so as to quickly determine the specific relay communication mode for terminal communication in a case that the terminal supports two relay communication modes.

Optionally, the relay communication mode includes at least one of the following:
a Layer 2 L2-only relay communication mode;
an L2-preferred relay communication mode;
a Layer 3 L3-only relay communication mode;
an L3-preferred relay communication mode;
a relay communication mode selected by the terminal; and
a pre-configured relay communication mode.

Optionally, that the URSP carries a relay communication mode includes: an access type preference component corresponding to the URSP carries a relay communication mode, and a non-seamless offload indication component corresponding to the URSP carries a relay communication mode.

Optionally, a granularity of the relay communication mode indicated by the application layer includes one of the following:
application identifier;
service type;
terminal;
link; and
L2 identifier.

Optionally, the first information includes at least one of the mapping relationship and the URSP; and
the radio frequency unit 1201 is further configured to receive the first information from a first core network device;
   or
the processor 1210 is further configured to obtain the first information that is pre-configured.

Optionally, the first information includes the mapping relationship, and the mapping relationship is carried in a proximity service policy transmitted by the first core network device.

Optionally, the first information includes the URSP, and the URSP is carried in a user equipment policy transmitted by the first core network device.

An embodiment of this application further provides a first core network device including a processor and a communication interface, where the communication interface is configured to transmit first information to a terminal; the first information includes at least one of the following: a mapping relationship between first objects and relay communication modes and a user equipment routing selection policy URSP; the first object includes an application identifier or a service type; and the URSP carries a relay communication mode. This first core network device embodiment corresponds to the foregoing method embodiment on the first core network device side. All implementations in the foregoing method embodiment may be applicable to this first core network device embodiment, with the same technical effect achieved.

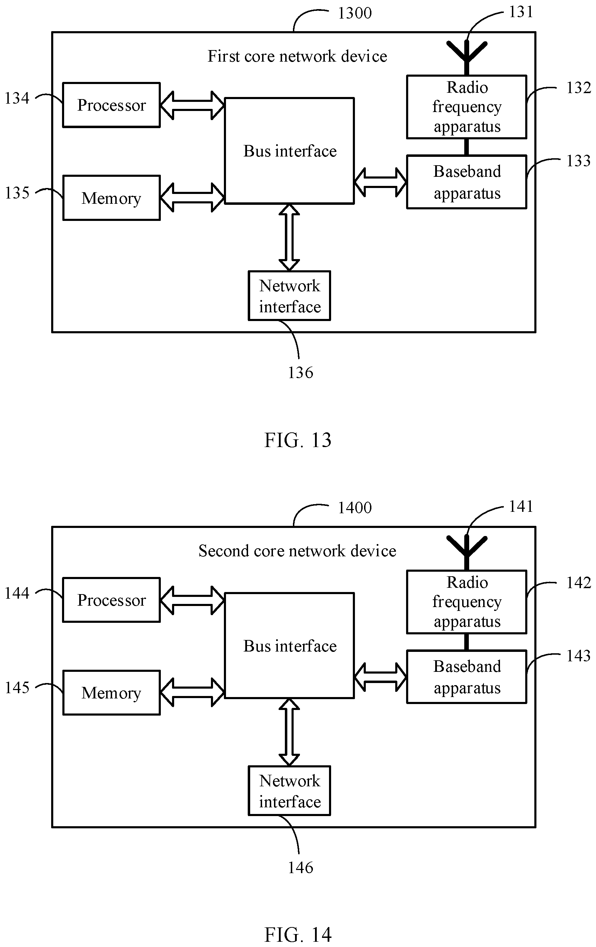

Specifically, an embodiment of this application further provides a first core network device. As shown in FIG. 13, the first core network device 1300 includes an antenna 131, a radio frequency apparatus 132, and a baseband apparatus 133. The antenna 131 is connected to the radio frequency apparatus 132. In an uplink direction, the radio frequency apparatus 132 receives information by using the antenna 131, and transmits the received information to the baseband apparatus 133 for processing. In a downlink direction, the baseband apparatus 133 processes to-be-transmitted information, and transmits the information to the radio frequency apparatus 132; and the radio frequency apparatus 132 processes the received information and then transmits the information out by using the antenna 131.

The frequency band processing apparatus may be located in the baseband apparatus 133. The method performed by the first core network device in the foregoing embodiment may be implemented in the baseband apparatus 133, and the baseband apparatus 133 includes a processor 134 and a memory 135.

The baseband apparatus 133 may include, for example, at least one baseband processing unit, where a plurality of chips are disposed on the baseband processing unit. As shown in FIG. 13, one of the chips is, for example, the processor 134, connected to the memory 135, to invoke a program in the memory 135 to perform the operation of the first core network device shown in the foregoing method embodiment.

The baseband apparatus 133 may further include a network interface 136 configured to exchange information with the radio frequency apparatus 132, where the interface is, for example, a common public radio interface (common public radio interface, CPRI for short).

Specifically, the first core network device in this embodiment of this application further includes: an instruction or a program stored in the memory 135 and capable of running on the processor 134. The processor 134 invokes the instruction or program in the memory 135 to execute the method executed by the modules shown in FIG. 8, with the same technical effects achieved. To avoid repetition, details are not repeated herein.

An embodiment of this application further provides a second core network device including a processor and a communication interface, where the communication interface is configured to transmit second information to a first core network device, and the second information is used for assisting in relay communication mode selection. This second core network device embodiment corresponds to the foregoing method embodiment on the second core network device side. All implementations in the foregoing method embodiment may be applicable to this second core network device embodiment, with the same technical effect achieved.

Specifically, an embodiment of this application further provides a second core network device. As shown in FIG. 14, the second core network device 1400 includes an antenna 141, a radio frequency apparatus 142, and a baseband apparatus 143. The antenna 141 is connected to the radio frequency apparatus 142. In an uplink direction, the radio frequency apparatus 142 receives information by using the antenna 141, and transmits the received information to the baseband apparatus 143 for processing. In a downlink direction, the baseband apparatus 143 processes to-be-transmitted information, and transmits the information to the radio frequency apparatus 142; and the radio frequency apparatus 142 processes the received information and then transmits the information out by using the antenna 141.

The frequency band processing apparatus may be located in the baseband apparatus 143. The method performed by the second core network device in the foregoing embodiment may be implemented in the baseband apparatus 143, and the baseband apparatus 143 includes a processor 144 and a memory 145.

The baseband apparatus 143 may include, for example, at least one baseband processing unit, where a plurality of chips are disposed on the baseband processing unit. As shown in FIG. 14, one of the chips is, for example, the processor 144, connected to the memory 145, to invoke a program in the memory 145 to perform the operation of the second core network device shown in the foregoing method embodiment.

The baseband apparatus 143 may further include a network interface 146 configured to exchange information with the radio frequency apparatus 142, where the interface is, for example, a common public radio interface (common public radio interface, CPRI for short).

Specifically, the second core network device in this embodiment of this application further includes: an instruction or a program stored in the memory 145 and capable of running on the processor 144. The processor 144 invokes the instruction or program in the memory 145 to execute the method executed by the modules shown in FIG. 9, with the same technical effects achieved. To avoid repetition, details are not repeated herein.

An embodiment of this application further provides an application server including a processor and a communication interface, where the communication interface is configured to transmit third information to a second core network device, where the third information includes information about relay communication mode selection. This application server embodiment corresponds to the foregoing method embodiment on the application server side. All implementations in the foregoing method embodiment may be applicable to this application server embodiment, with the same technical effect achieved.

An embodiment of this application further provides a readable storage medium, where a program or instructions are stored in the readable storage medium. When the program or instructions are executed by a processor, the processes of the foregoing embodiment of the method for determining a communication mode on the terminal side can be implemented, or the processes of the foregoing embodiment of the method for determining a communication mode on the first core network device side can be implemented, or the processes of the foregoing embodiment of the method for determining a communication mode on the second core network device side can be implemented, or the processes of the foregoing embodiment of the method for determining a communication mode on the application server side can be implemented, with same technical effects achieved. To avoid repetition, details are not repeated herein.

The processor is the processor of the terminal in the foregoing embodiment or the processor of the network-side device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiment of the method for determining a communication mode on the terminal side, or to implement the processes of the foregoing embodiment of the method for determining a communication mode on the first core network device side, or to implement the processes of the foregoing embodiment of the method for determining a communication mode on the second core network device side, or to implement the processes of the foregoing embodiment of the method for determining a communication mode on the application server side, with same technical effects achieved. To avoid repetition, details are not repeated herein.

It should be understood that the chip mentioned in the embodiments of this application may also be referred to as a system-level chip, a system chip, a chip system, a system-on-chip, or the like.

It should be noted that in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for determining a communication mode, comprising:
obtaining, by a terminal, first information, wherein the first information comprises at least one of the following: a mapping relationship between first objects and relay communication modes, a user equipment routing selection policy URSP, a relay communication mode indicated by an application layer, and an existing relay communication mode of the terminal; the first object comprises an application identifier or a service type; and the URSP carries a relay communication mode; and
determining, by the terminal, a first relay communication mode based on the first information.

2. The method according to claim 1, wherein the relay communication mode comprises at least one of the following:
a Layer 2 L2-only relay communication mode;
an L2-preferred relay communication mode;
a Layer 3 L3-only relay communication mode;
an L3-preferred relay communication mode;
a relay communication mode selected by the terminal; and
a pre-configured relay communication mode.

3. The method according to claim 1, wherein that the URSP carries a relay communication mode comprises: an access type preference component corresponding to the URSP carries a relay communication mode, and a non-seamless offload indication component corresponding to the URSP carries a relay communication mode.

4. The method according to claim 1, wherein a granularity of the relay communication mode indicated by the application layer comprises one of the following:
application identifier;
service type;
terminal;
link; and
L2 identifier.

5. The method according to claim 1, wherein the first information comprises at least one of the mapping relationship and the URSP; and
the obtaining, by a terminal, first information comprises:
receiving, by the terminal, the first information from a first core network device;
or
obtaining, by the terminal, the first information that is pre-configured.

6. The method according to claim 5, wherein the first information comprises the mapping relationship, and the mapping relationship is carried in a proximity service policy transmitted by the first core network device.

7. The method according to claim 5, wherein the first information comprises the URSP, and the URSP is carried in a user equipment policy transmitted by the first core network device.

8. An apparatus for determining a communication mode, comprising:
a first obtaining module, configured to obtain first information, wherein the first information comprises at least one of the following: a mapping relationship between first objects and relay communication modes, a user equipment routing selection policy URSP, a relay communication mode indicated by an application layer, and an existing relay communication mode of a terminal; the first object comprises an application identifier or a service type; and the URSP carries a relay communication mode; and
a first determining module, configured to determine a first relay communication mode based on the first information.

9. The apparatus according to claim 8, wherein the relay communication mode comprises at least one of the following:
a Layer 2 L2-only relay communication mode;
an L2-preferred relay communication mode;
a Layer 3 L3-only relay communication mode;
an L3-preferred relay communication mode;
a relay communication mode selected by the terminal; and
a pre-configured relay communication mode.

10. The apparatus according to claim 8, wherein that the URSP carries a relay communication mode comprises: an access type preference component corresponding to the URSP carries a relay communication mode, and a non-seamless offload indication component corresponding to the URSP carries a relay communication mode.

11. The apparatus according to claim 8, wherein a granularity of the relay communication mode indicated by the application layer comprises one of the following:
application identifier;
service type;
terminal;
link; and
L2 identifier.

12. The apparatus according to claim 8, wherein the first information comprises at least one of the mapping relationship and the URSP; and
the first obtaining module is specifically configured to:
receive the first information from a first core network device;
or
obtain the first information that is pre-configured.

13. The apparatus according to claim 12, wherein the first information comprises the mapping relationship, and the mapping relationship is carried in a proximity service policy transmitted by the first core network device.

14. The apparatus according to claim 12, wherein the first information comprises the URSP, and the URSP is carried in a user equipment policy transmitted by the first core network device.

15. A method for determining a communication mode, comprising:
transmitting, by a first core network device, first information to a terminal; wherein
the first information comprises at least one of the following: a mapping relationship between first objects and relay communication modes and a user equipment routing selection policy URSP; the first object comprises an application identifier or a service type; and the URSP carries a relay communication mode.

16. The method according to claim 15, wherein that the URSP carries a relay communication mode comprises: an access type preference component corresponding to the URSP carries a relay communication mode, and a non-seamless offload indication component corresponding to the URSP carries a relay communication mode.

17. The method according to claim 15, wherein the first information comprises the mapping relationship, and the mapping relationship is carried in a proximity service policy transmitted by the first core network device.

18. The method according to claim 15, wherein the first information comprises the URSP, and the URSP is carried in a user equipment policy transmitted by the first core network device.

19. The method according to claim 15, wherein the method further comprises:
obtaining, by the first core network device, second information, wherein the second information is used for assisting in relay communication mode selection; and
generating, by the first core network device, the first information based on the second information.

20. The method according to claim 19, wherein the obtaining, by the first core network device, second information comprises one of the following:
receiving, by the first core network device, the second information from a second core network device;
obtaining, by the first core network device, the second information that is pre-configured;
obtaining, by the first core network device, the second information that is configured by an operator;
determining, by the first core network device, the second information based on a pre-configured policy; and
determining, by the first core network device, the second information based on an operator policy.

21. An apparatus for determining a communication mode, comprising:
a first transmitting module, configured to transmit first information to a terminal; wherein
the first information comprises at least one of the following: a mapping relationship between first objects and relay communication modes and a user equipment routing selection policy URSP; the first object comprises an application identifier or a service type; and the URSP carries a relay communication mode.

22. The apparatus according to claim 21, wherein that the URSP carries a relay communication mode comprises: an access type preference component corresponding to the URSP carries a relay communication mode, and a non-seamless offload indication component corresponding to the URSP carries a relay communication mode.

23. The apparatus according to claim 21, wherein the first information comprises the mapping relationship, and the mapping relationship is carried in a proximity service policy transmitted by the apparatus for determining a communication mode.

24. The apparatus according to claim 21, wherein the first information comprises the URSP, and the URSP is carried in a user equipment policy transmitted by the apparatus for determining a communication mode.

25. The apparatus according to claim 21, wherein the apparatus further comprises:
a second obtaining module, configured to obtain second information, wherein the second information is used for assisting in relay communication mode selection; and
a first generating module, configured to generate the first information based on the second information.

26. The apparatus according to claim 25, wherein the second obtaining module is specifically configured to perform one of the following:
receiving the second information from a second core network device;
obtaining the second information that is pre-configured;
obtaining the second information that is configured by an operator;
determining the second information based on a pre-configured policy; and
determining the second information based on an operator policy.

27. A method for determining a communication mode, comprising:
transmitting, by a second core network device, second information to a first core network device; wherein
the second information is used for assisting in relay communication mode selection.

28. The method according to claim 27, wherein the method further comprises:
obtaining, by the second core network device, third information, wherein the third information comprises information about relay communication mode selection; and
generating, by the second core network device, the second information based on the third information.

29. The method according to claim 28, wherein the obtaining, by the second core network device, third information comprises:
obtaining, by the second core network device, the third information from an application server.

30. An apparatus for determining a communication mode, comprising:
a second transmitting module, configured to transmit second information to a first core network device; wherein
the second information is used for assisting in relay communication mode selection.

31. The apparatus according to claim 30, wherein the apparatus further comprises:
a third obtaining module, configured to obtain third information, wherein the third information comprises information about relay communication mode selection; and
a second generating module, configured to generate the second information based on the third information.

32. The apparatus according to claim 31, wherein the third obtaining module is specifically configured to:
obtain the third information from an application server.

33. A method for determining a communication mode, comprising:
transmitting, by an application server, third information to a second core network device, wherein the third information comprises information about relay communication mode selection.

34. An apparatus for determining a communication mode, comprising:
a third transmitting module, configured to transmit third information to a second core network device, wherein the third information comprises information about relay communication mode selection.

35. A terminal, comprising a processor, a memory, and a program or instructions stored in the memory and capable of running on the processor, wherein when the program or the instructions are executed by the processor, the steps of the method for determining a communication mode according to any one of claims 1 to 7 are implemented.

36. A core network device, comprising a processor, a memory, and a program or instructions stored in the memory and capable of running on the processor, wherein when the program or the instructions are executed by the processor, the steps of the method for determining a communication mode according to any one of claims 15 to 20 are implemented.

37. A core network device, comprising a processor, a memory, and a program or instructions stored in the memory and capable of running on the processor, wherein when the program or the instructions are executed by the processor, the steps of the method for determining a communication mode according to any one of claims 27 to 29 are implemented.

38. An application server, comprising a processor, a memory, and a program or instructions stored in the memory and capable of running on the processor, wherein when the program or the instructions are executed by the processor, the step of the method for determining a communication mode according to claim 33 is implemented.

39. A readable storage medium, wherein a program or instructions are stored in the readable storage medium; and when the program or the instructions are executed by a processor, the steps of the method for determining a communication mode according to any one of claims 1 to 7 are implemented, the steps of the method for determining a communication mode according to any one of claims 15 to 20 are implemented, the steps of the method for determining a communication mode according to any one of claims 27 to 29 are implemented, or the step of the method for determining a communication mode according to claim 33 is implemented.

40. A chip, wherein the chip comprises a processor and a communication interface, the communication interface is coupled to the processor, and the processor is configured to run a program or instructions to implement the steps of the method for determining a communication mode according to any one of claims 1 to 7, the steps of the method for determining a communication mode according to any one of claims 15 to 20, the steps of the method for determining a communication mode according to any one of claims 27 to 29, or the step of the method for determining a communication mode according to claim 33.

41. A computer program product, wherein the computer program product is stored in a non-volatile storage medium, and when the computer program product is executed by at least one processor, the steps of the method for determining a communication mode according to any one of claims 1 to 7 are implemented, the steps of the method for determining a communication mode according to any one of claims 15 to 20 are implemented, the steps of the method for determining a communication mode according to any one of claims 27 to 29 are implemented, or the step of the method for determining a communication mode according to claim 33 is implemented.
